# EUROPÄISCHE PATENTSCHRIFT

(11) **EP 0 713 740 B1**
(45) Veröffentlichungstag und Bekanntmachung des Hinweises auf die Patenterteilung: **18.03.1998**
(21) Anmeldenummer: 95810519.9
(22) Anmeldetag: 17.08.1995
(51) Int. Cl.: B23B 51/04, B28D 1/04, F16B 39/34

(54) **Bohrwerkzeug**
Drilling tool
Outil de forage

(30) Priorität: 24.10.1994 DE 4437952
(43) Veröffentlichungstag der Anmeldung: 29.05.1996
(73) Patentinhaber: HILTI Aktiengesellschaft, 9494 Schaan (LI)
(72) Erfinder: Lauermann, Werner, A-6713 Ludesch (AT); Geiger, Markus, A-6822 (AT); Spangenberg, Rolf, D-82131 Gauting (DE)
(74) Vertreter: Wildi, Roland

(56) Entgegenhaltungen:
- DE-A- 4 243 151
- US-A- 4 427 326
- US-A- 4 470 735

## Beschreibung

Die Erfindung betrifft ein Bohrwerkzeug mit einem, ein Einsteckende bildenden ersten Teil und einem ein mit Bohrschneiden besetztes Trägerteil bildenden zweiten Teil, wobei zwischen den beiden Teilen eine Gewindeverbindung besteht und an beiden Teilen miteinander zusammenwirkende Anschlagflächen angeordnet sind.

Zum Herstellen von grossen Bohrungen in Mauerwerk, Beton oder Gestein werden Bohrwerkzeuge verwendet, die ein Trägerteil aufweisen, welches an einer ringförmigen Stirnfläche mit Bohrschneiden versehen ist. Beim Ausbohren der betreffenden Bohrung bleibt zunächst ein innerer Kern stehen, der anschliessend mit einem geeigneten Werkzeug herausgebrochen wird.

Ein aus dem DE-GM 18 97 841 bekanntes Bohrwerkzeug setzt sich aus einem Einsteckende und einem mit Bohrschneiden besetzten Trägerteil zusammen, wobei das Einsteckende und das Trägerteil über eine Gewindeverbindung miteinander verbunden sind.

Aus logistischen Gründen werden beim Vertrieb der oben genannten Bohrwerkzeuge Trägerteile mit verschiedenen Durchmessem und unterschiedlichen Einsteckenden, für unterschiedliche Antriebsgeräte gesondert bevorratet, wobei die Trägerteile und die Einsteckenden einheitliche Verbindungsstellen besitzen. Somit kann im Bereich der zulässigen Kombination ein vom Kunden gewünschtes Trägerteil mit einem vom Kunden gewünschten Einsteckende kombiniert werden. Da die Gewindeverbindung der Bohrwerkzeuge lösbar ist, besteht die Möglichkeit, dass ein Nicht-Fachmann das Bohrwerkzeug auseinanderschrauben kann und beispielsweise auf das Einsteckende ein anderes Trägerteil schraubt. Liegt die vom Nicht-Fachmann geschaffene Kombination von Einsteckende und Trägerteil nicht im Bereich der zulässigen Kombinationen, so kann dies beispielsweise zu einem ungenügenden Bohrfortschritt oder zu einer Beschädigung des Bohrwerkzeuges oder des Antriebsgerätes führen.

Der Erfindung liegt die Aufgabe zugrunde, ein Bohrwerkzeug mit Einsteckende und Trägerteil zu schaffen, das nach zulässiger, von einem Fachmann vorgenommener Kombination nicht wieder getrennt werden kann.

Erfindungsgemäss wird die Aufgabe dadurch gelöst, dass an einem der beiden Teile eine Nut und am jeweils anderen Teil eine Aufnahmenut mit einliegendem, radial federbaren Federring angeordnet ist, wobei der Abstand der Nut von der Anschlagfläche des die Nut aufweisenden Teiles dem Abstand der Aufnahmenut von der Anschlagfläche des die Aufnahmenut aufweisenden Teiles entspricht.

Bei der Kombination des Trägerteils mit dem Einsteckende werden über die Gewindeverbindung beide Teile miteinander verbunden. Dabei wird der Federring von dem eine Nut aufweisenden Teil radial aufgeweitet und von diesem wenigstens teilweise durchsetzt. Wenn die Anschlagfläche des Trägerteiles an der Anschlagfläche des Einsteckendes zur Anlage gelangt, springt der aufgeweitete Federring in die Nut und legt somit das die Nut aufweisende Teil, an dem die Aufnahmenut aufweisenden Teil axial fest.

Vorzugsweise trägt der die Nut aufweisende Teil ein Aussengewinde, dessen Länge höchstens dem Abstand der Nut von der Anschlagfläche entspricht. Damit wird eine Beschädigung des Aussengewindes an dem die Nut aufweisenden Teil verhindert, wenn dieses wenigstens teilweise den Federring durchsetzt.

Zweckmässigerweise weist das die Nut aufweisende Teil zwischen dem Aussengewinde und dem in das die Aufnahmenut aufweisenden Teil ragenden freien Ende einen Führungsbereich mit einem Aussendurchmesser auf, der kleiner ist als der Kerndurchmesser des Aussengewindes. Somit wird ein Innengewinde des die Aufnahmenut aufweisenden Teiles von jenem Teil, das die Nut aufweist und den Federring durchsetzt nicht beschädigt.

Um eine radiale Aufweitung des Federringes gewährleisten zu können, verengt sich vorteilhafterweise der Führungsbereich zum freien Ende hin, wobei der kleinste Aussendurchmesser des Führungsbereiches kleiner ist als der Innendurchmesser des entspannten Federringes.

Bei Bohrwerkzeugen, dessen Trägerteil einen kleinen Durchmesser aufweist, ist vorteilhafterweise das die Nut aufweisende Teil vom Trägerteil und das die Aufnahmenut aufweisende Teil vom Einsteckende gebildet.

Bei Bohrwerkzeugen, dessen Trägerteil einen grossen Durchmesser aufweist, ist vorzugsweise das die Nut aufweisende Teil vom Einsteckende und das die Aufnahmenut aufweisende Teil vom Trägerteil gebildet.

Die Erfindung wird anhand von Zeichnungen, die zwei Ausführungsbeispiele zeigen, näher erläutert. Es zeigen:
- Fig. 1: ein erfindungsgemässes Bohrwerkzeug mit einem eine Nut aufweisenden Trägerteil und eine Aufnahmenut aufweisenden Einsteckende;
- Fig. 2: ein weiteres Bohrwerkzeug mit einem eine Nut aufweisenden Einsteckende und einem Aufnahmenut aufweisenden Trägerteil.

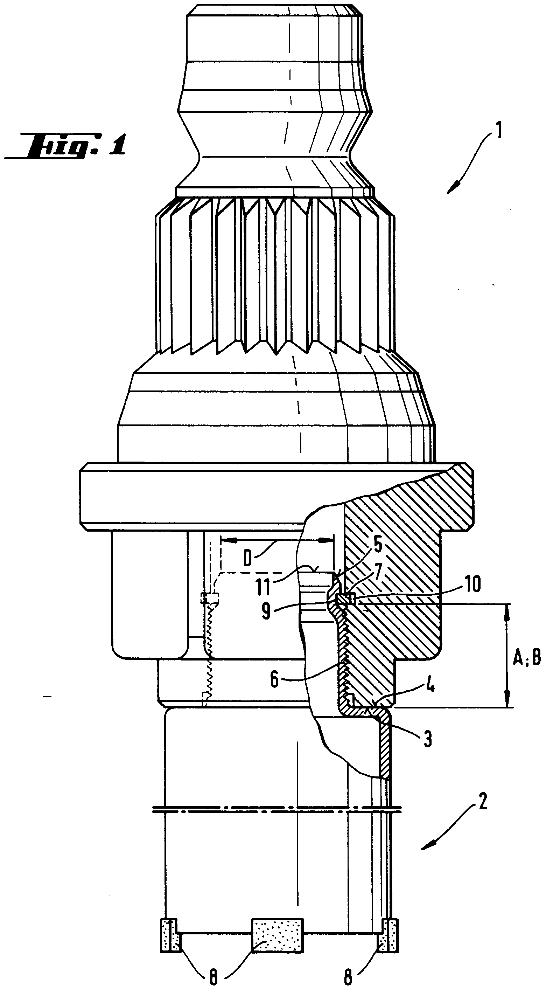

Das in der Figur 1 dargestellte Bohrwerkzeug setzt sich aus einem Einsteckende 1 und einem mit Bohrschneiden 8 besetzten Trägerteil 2 zusammen. Beide Teile sind über eine Gewindeverbindung miteinander verbunden. Das Einsteckende 1 besitzt eine, in einer zentralen Öffnung angeordnete, umlaufend ausgebildete Aufnahmenut 10, in der ein radial federbarer Federring 7 einliegt. Zwischen der Aufnahmenut 10 und der Anschlagfläche 3 besitzt das Einsteckende 1 ein Innengewinde, welches mit einem Aussengewinde 6 des Trägerteiles 2 zusammenwirkt. Das Aussengewinde 6 erstreckt sich von der Anschlagfläche 4 bis zu einer umlaufend ausgebildeten Nut 9. Der Abstand A der Nut 9 von der Anschlagfläche 4 des Trägerteiles 2 entspricht dem Abstand B der Aufnahmenut 10 von der Anschlagfläche 3 des Einsteckendes 7.

Zwischen der Nut 9 und dem freien Ende 11 des Trägerteiles 2 besitzt das Trägerteil 2 einen Führungsbereich 5, der einen Aussendurchmesser aufweist, der kleiner ist als der Kerndurchmesser des Aussengewindes 6. Der Führungsbereich 5 verjüngt sich zum freien Ende 11 des Trägerteiles 2, wobei der kleinste Aussendurchmesser D kleiner ist als der Innendurchmesser des entspannten Federringes.

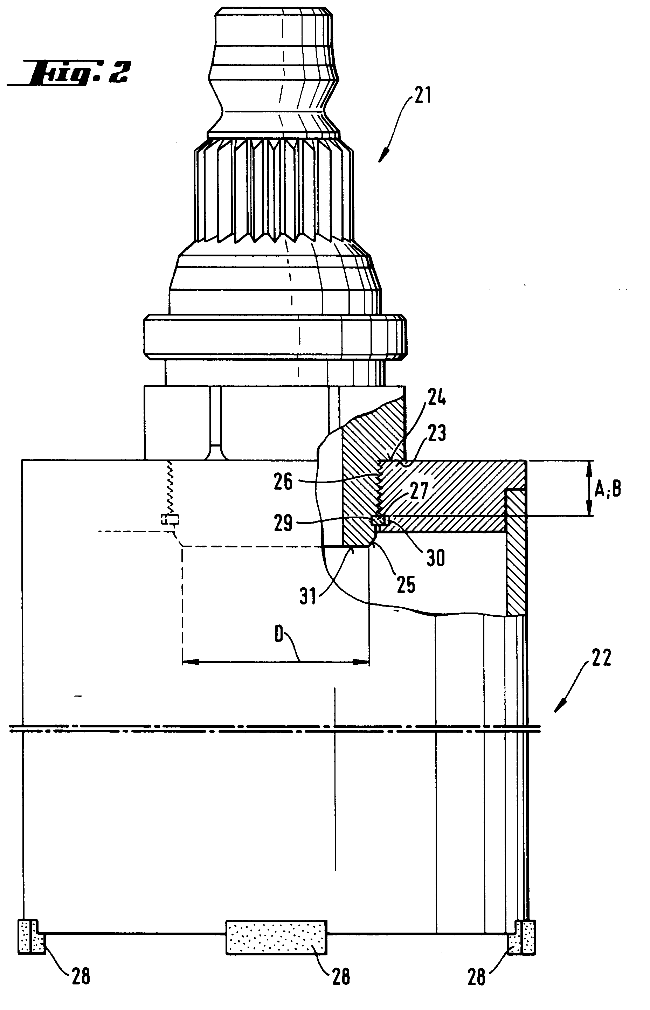

Das in Fig. 2 dargestellte Bohrwerkzeug setzt sich aus einem Einsteckende 21 und einem mit Bohrschneiden 28 besetzten Trägerteil 22 zusammen. Beide Teile sind über eine Gewindeverbindung miteinander verbunden. Das Trägerteil 22 besitzt an einem den Bohrschneiden 28 gegenüberliegenden Bereich eine zentrale Durchgangsbohrung, in der eine umlaufend ausgebildete Aufnahmenut 30 angeordnet ist. Die Aufnahmenut 30 dient der Aufnahme und der Führung eines radial federbaren Federringes 27. Zwischen der Aufnahmenut 30 und der Anschlagfläche 24 besitzt die Durchgangsbohrung des Trägerteiles 22 ein Innengewinde, welches mit einem Aussengewinde 26 des Einsteckendes 21 zusammenwirkt. Das Aussengewinde 26 erstreckt sich von der Anschlagfläche 23 bis zu einer umlaufend ausgebildeten Nut 29, die an der Aussenseite des Einsteckendes 21 angeordnet ist. Der Abstand A der Nut 29 von der Anschlagfläche 23 des Einsteckendes 21 entspricht dem Abstand B der Aufnahmenut 30 von der Anschlagfläche 24 des Trägerteiles 22.

Zwischen der Nut 29 und dem freien Ende 31 des Einsteckendes 21 besitzt das Einsteckende 21 einen Führungsbereich 25, der einen Aussendurchmesser aufweist, der kleiner ist als der Kemdurchmesser des Aussengewindes 26. Der Führungsbereich 25 verjüngt sich zum freien Ende 31 des Einsteckendes 21, wobei der kleinste Aussendurchmesser D kleiner ist als der Innendurchmesser des entspannten Federringes 27.

## Patentansprüche

1. Bohrwerkzeug mit einem, ein Einsteckende (1, 21) bildenden ersten Teil und einem, ein mit Bohrschneiden (8, 28) besetztes Trägerteil (2, 22) bildenden zweiten Teil, wobei zwischen den beiden Teilen eine Gewindeverbindung besteht und an beiden Teilen miteinander zusammenwirkende Anschlagflächen (3, 4, 23, 24) angeordnet sind, **dadurch gekennzeichnet,** dass an einem der beiden Teile eine Nut (9, 29) und am jeweils anderen Teil eine Aufnahmenut (10, 30) mit einliegendem, radial federbaren Federring (7, 27) angeordnet ist, wobei der Abstand (A) der Nut (9, 29) von der Anschlagfläche (4, 23) des die Nut (9, 29) aufweisenden Teiles dem Abstand (B) der Aufnahmenut (10, 30) von der Anschlagfläche (3, 24) des die Aufnahmenut (10, 30) aufweisenden Teiles entspricht.

2. Bohrwerkzeug nach Anspruch 1, dadurch gekennzeichnet, dass der die Nut (9, 29) aufweisende Teil ein Aussengewinde (6, 26) trägt, dessen Länge höchstens dem Abstand (A) der Nut (9, 29) von der Anschlagfläche (4, 23) entspricht.

3. Bohrwerkzeug nach Anspruch 2, dadurch gekennzeichnet, dass das die Nut (9, 29) aufweisende Teil zwischen dem Aussengewinde (6, 26) und dem in das die Aufnahmenut (10, 20) aufweisenden Teil ragenden freien Ende (11, 31) einen Führungsbereich (5, 25) mit einem Aussendurchmesser aufweist, der kleiner ist als der Kerndurchmesser des Aussengewindes (6, 26).

4. Bohrwerkzeug nach Anspruch 3, dadurch gekennzeichnet, dass sich der Führungsbereich (5, 25) zum freien Ende (11, 31) hin verjüngt, wobei der kleinste Aussendurchmesser (D) des Führungsbereiches (5, 25) kleiner ist als der Innendurchmesser des entspannten Federringes (7, 27).

5. Bohrwerkzeug nach einem der Ansprüche 1 bis 4, dadurch gekennzeichnet, dass das die Nut (9) aufweisende Teil vom Trägerteil (2) und das die Aufnahmenut (10) aufweisende Teil vom Einsteckende (1) gebildet ist.

6. Bohrwerkzeug nach einem der Ansprüche 1 bis 4, dadurch gekennzeichnet, dass das die Nut (29) aufweisende Teil vom Einsteckende (21) und das die Aufnahmenut (30) aufweisende Teil vom Trägerteil (22) gebildet ist.

## Claims

1. A drilling tool having a first part forming an insertion end (1, 21) and a second part forming a carrier part (2, 22) which is occupied by drilling bits (8, 28), wherein a threaded joint exists between the two parts and mutually cooperating stop faces (3, 4, 23, 24) are disposed on both parts, **characterised in that** a groove (9, 29) is disposed on one of the two parts, and a receiving groove (10, 30), which has an inserted, radially spring-loaded spring ring (7, 27), is disposed on the other part in each case, wherein the distance (A) of the groove (9, 29) from the stop face (4, 23) of the part comprising the groove (9, 29) corresponds to the distance (B) of the receiving groove (10, 30) from the stop face (3, 24) of the part comprising the receiving groove (10, 30).

2. A drilling tool according to claim 1, characterised in that the part comprising the groove (9, 29) carries an external thread (6, 26), the length of which corresponds at most to the distance (A) of the groove (9, 29) from the stop face (4, 23).

3. A drilling tool according to claim 2, characterised in that the part comprising the groove (9, 29) has a guide region (5, 25) between the external thread (6, 26) and the free end (11, 31) which projects into the part comprising the receiving groove (10, 20), which guide region has an outside diameter which is smaller than the core diameter of the external thread (6, 26).

4. A drilling tool according to claim 3, characterised in that the guide region (5, 25) diminishes towards the free end (11, 31), wherein the smallest outside diameter (D) of the guide region (5, 25) is smaller than the inside diameter of the unstressed spring ring (7, 27).

5. A drilling tool according to any one of claims 1 to 4, characterised in that the part comprising the groove (9) is formed by the carrier part (2) and the part comprising the receiving groove (10) is formed by the insertion end (1).

6. A drilling tool according to any one of claims 1 to 4, characterised in that the part comprising the groove (29) is formed by the insertion end (21) and the part comprising the receiving groove (30) is formed by the carrier part (22).

## Revendications

1. Outil de forage, comprenant une première section formant une tige de foret (1, 21) et une seconde section formant une section de support (2, 22) garnie de burins d'alésoir (8, 28), les deux sections étant assemblées par vissage et les deux sections comportant chacune des surfaces d'arrêt (3, 4, 23, 24) qui coopèrent les unes avec les autres, **caractérisé en ce** que sur l'une des deux sections est prévue une rainure (9, 29) et que respectivement l'autre section est pourvue d'une rainure de réception (10, 30) dans laquelle est insérée une rondelle-ressort (7, 27) élastique dans le sens radial, la distance (A) entre la rainure (9, 29) et la surface d'arrêt (4, 23) de la section comportant la rainure (9, 29) correspondant à la distance (B) entre la rainure de réception (10, 30) et la surface d'arrêt (3, 24) de la section comportant la rainure de réception (10, 30).

2. Outil de forage selon la revendication 1, caractérisé en ce que la section comportant la rainure (9, 29) porte un filetage extérieur (6, 26) dont la longueur correspond au maximum à la distance (A) entre la rainure (9, 29) et la surface d'arrêt (4, 23).

3. Outil de forage selon la revendication 2, caractérisé en ce que la section comportant la rainure (9, 29) présente entre le filetage extérieur (6, 26) et l'extrémité libre (11, 31) dépassant dans la section comportant la rainure de réception (10, 20), une section de guidage (5, 25) dont le diamètre extérieur est inférieur au diamètre du noyau du filetage extérieur (6, 26).

4. Outil de forage selon la revendication 3, caractérisé en ce que la section de guidage (5, 25) se rétrécit en direction de l'extrémité libre (11, 31), le plus petit diamètre extérieur (D) de la section de guidage (5, 25) étant inférieur au diamètre intérieur de la rondelle-ressort (7, 27) détendue.

5. Outil de forage selon l'une des revendications 1 à 4, caractérisé en ce que la section comportant la rainure (9) est constituée par la section de support (2) et que la section comportant la rainure de réception (10) est constituée par la tige de foret (1).

6. Outil de forage selon l'une des revendications 1 à 4, caractérisé en ce que la section comportant la rainure (29) est constituée par la tige de foret (21) et que la section comportant la rainure de réception (30) est constituée par la section de support (22).
